# EUROPEAN PATENT SPECIFICATION

(11) **EP 3 705 771 B1**
(45) Date of publication and mention of the grant of the patent: **27.10.2021**
(21) Application number: 20161462.5
(22) Date of filing: 06.03.2020
(51) Int. Cl.: F16P 3/14, E02F 9/24, G01S 7/497

(54) **ACTIVE SAFETY SYSTEM BASED ON ACTIVE MULTIPLE FREQUENCY RFID DEVICES**
AKTIVES SICHERHEITSSYSTEM BASIEREND AUF AKTIVEN MEHRFREQUENZ-RFID-VORRICHTUNGEN
SYSTÈME DE SÉCURITÉ ACTIVE BASÉ SUR DES DISPOSITIFS RFID ACTIFS À FRÉQUENCES MULTIPLES

(30) Priority: 06.03.2019 IT 201900003217
(43) Date of publication of application: 09.09.2020
(73) Proprietor: Bonifacio, Filippo, 50134 Firenze (IT); Salvador, Claudio, 50018 Sandicci (IT)
(72) Inventor: Bonifacio, Filippo, 50134 Firenze (IT); Salvador, Claudio, 50018 Sandicci (IT)
(74) Representative: Savi, Massimiliano

(56) References cited:
- EP-A1- 3 112 900
- WO-A2-2007/076095
- DE-A1-102004 024 073
- FR-A1- 2 922 674
- KR-B1- 100 974 946
- US-A1- 2011 171 904
- US-A1- 2016 110 984

## Description

### FIELD OF THE INVENTION

The present invention relates to the field of workplace accident prevention devices, in particular to the field of devices adapted to implement the so-called "active safety", based on the smart application of advanced technologies such as RFID technology, for example.

An active safety solution is a set of integrated automatic or semi-automatic systems which prevent accidents based on the identification of potential hazard and based on an instrumental assessment of the level of risk associated therewith.

### BACKGROUND ART

The movement of goods and machinery in the industrial, agricultural or construction field involves numerous risks both for the safety of the people and operators involved as well as for the damage which the goods and machinery handled may suffer. Collisions of vehicles or heavy vehicles with ground operators, or of heavy vehicles or vehicles with each other, or with fixed obstacles, are common to all industrial, agricultural or construction fields: warehouses, production areas, construction sites, docks, etc.

Patent document KR100974946 describes a crane collision preventive system and a method for reducing a working time and extending the service life of crane equipment that prevent the collision between cranes by detecting the interval of two cranes using high frequency and low frequency through a wireless module. The protection systems against possible accidents in the workplace described may be divided into two categories. The first category relates to passive devices, which act by trying to reduce the possible damage to the operator resulting from the accident. This group includes, for example, personal protective devices such as gloves, safety shoes, gas masks, hard hats, etc., as well as the barriers which delimit pedestrian corridors within dangerous work areas and which provide a barrier against the possible intrusion of trolleys or other heavy vehicles.

The second category relates to active devices adapted to detect the risks of potential collisions. Examples of devices belonging to this second category are systems based, for example, on optical devices, on laser devices or on radars, adapted to scan the area of possible interference and launch possible alarms in case danger factors are detected. Systems also exist, which detect collision risks, by virtue of devices associated with both the potentially interfering subjects, by means of a detection which uses information originating from both the subjects of interest. For example, ground operators may be equipped with RF TAGs, allowing specific sensors installed on vehicles and heavy vehicles operating in the area to detect operator proximity. By means of similar systems, the risks of possible collisions of vehicles and heavy vehicles with each other and of vehicles and heavy vehicles with fixed obstacles and structures may also be detected.

Other active safety systems in use allow modifying the behavior of the vehicle and of the on-board systems before the collision risk is detected, based on the presumed risk level of the area of interest or of the moment of use of the area itself. Examples of systems of this type are adapted to slow down the vehicle or heavy vehicle when the presence of a ceiling or of a roof of the working area is detected by means of radars or optical devices, so as to increase the safety margin in covered areas where, often, maneuvering room is limited and the presence of operators is higher. Systems of this type may not in any way be configured to delimit areas, discriminating them from others, within the area located under the same roof or within the same industrial warehouse, nor may dynamically adapt to changes occurred under conditions of risk. Therefore, these systems are characterized by a rigidity which makes them applicable only in cases of highly simple industrial layouts and are completely inapplicable in most industrial sites.

From this point of view, the rigidity of the systems of the background art is therefore a major drawback, also given situations in which construction sites or work environments to be secured frequently change the layout thereof - i.e., the arrangement of the passages and of fixed structures, machinery and operators therewithin - or the risk conditions of the various areas dynamically change even in cases in which the layout does not change but the operating conditions within the various areas change.

It is clear that, in these cases, the aforesaid systems are difficult to apply since they should be continuously updated and recalibrated even in very short times, with consequent onerous expense in terms of time and costs.

In addition to this, it must be added that the systematic slowdown of a vehicle, as required in areas of potential collision risk, has significant repercussions on the productivity of the system itself and must therefore be carried out in a manner which is cautious and not too penalizing in terms of safety and productivity of the workplace. It is preferable, therefore, that the slowdown of vehicles and means within the working area is carried out only in cases in which, in fact, this allows reducing the risk of collision, and not in a systematic manner, as background art systems do.

It would therefore be desirable to have a system for spatially and temporally conditioning the systems of protection against possible accidents in the workplace, which allows defining in an articulated manner the areas of interest and operation, and which offers the possibility of being reconfigured in a manner which is simple and minimally invasive from the point of view of installations required. The usefulness of a system of this type is twofold: firstly, it may advantageously store and communicate the data relating to each single danger or collision failure event detected, and secondly, it may use the knowledge of the events detected by the anti-collision systems to understand which areas have a greater interference probability, and therefore to define in a timely and precise manner the areas within which to change or suitably adapt the behavior of the vehicle. In addition, spatial conditioning would also act on the operating parameters of the anti-collision system itself, optimizing them so as to change the response of the anti-collision system according to the area. Lastly, self-learning and self-updating functions may allow obtaining systems for spatially conditioning the systems of protection against possible accidents in the workplace, which manage to respond in real time to the changed conditions of the area in which they are to operate.

A system for spatially and temporally conditioning the systems of protection against possible accidents in the workplace with the features described above would allow quickly and inexpensively updating and reconfiguring both the protection systems as well as the functional parameters of the means within the working area against possible accidents, by conditioning and adjusting speeds and, more generally, the behavior of the vehicles and means operating within the area of interest.

### BRIEF DESCRIPTION OF THE FIGURES

The present description will become more apparent from the following description of exemplary embodiments thereof, to be considered together with the accompanying drawings, in which:
Figure 1 shows a block diagram of a preferred embodiment of the system according to the present invention adapted to ensure the safety of operators on foot in working areas populated by vehicles;
Figure 2 shows a block diagram of another preferred embodiment of the system according to the present invention adapted to obtain an "electronic gate" function;
Figure 3 shows a block diagram of a further preferred embodiment of the system according to the present invention adapted to obtain an "electronic gate" function;
Figure 4 shows a block diagram of another preferred embodiment of the system according to the present invention which uses a geo-referenced position detector and maps contained in local storage means;
Figure 5 shows a block diagram of another preferred embodiment of the system according to the present invention adapted to ensure the safety of operators on foot and of structures of interest in working areas populated by vehicles, and to prohibit access to areas of interest by vehicles;
Figure 6 shows a block diagram of another preferred embodiment of the system according to the present invention which uses a geo-referenced position detector and maps contained in storage means which may be reached by means of a communication module adapted to establish a wireless connection with a remote server;
Figure 7 shows a block diagram of another preferred embodiment of the system according to the present invention which uses a geo-referenced position detector and maps contained in storage means which may be reached by means of a communication module adapted to establish a wireless connection with a remote server and a further remote control unit adapted to implement functions for the dynamic management of the spatial conditioning of the safety system; and
Figure 8 shows a block diagram of a further preferred embodiment of the system according to the present invention adapted to allow the detection of the passage crossing to produce remote acoustic and/or visual signals.

The following description of exemplary embodiments relates to the accompanying drawings. The same reference numerals in different drawings identify the same or similar elements. The following detailed description does not limit the invention. Instead, the scope of protection of the invention is defined by the appended claims.

### SUMMARY OF THE INVENTION

The present invention uses technology based on multiple frequency active RFID devices to create an active safety system intended, in particular, for the field of prevention of accidents and injuries within working areas. The system of the present application uses devices associated with operators on foot, vehicles and fixed or movable structures of the industrial environment the safety of which is to be ensured. A supervision system allows the devices on board the vehicles operating in the area of interest to be updated and conditioned based on contingent space-time conditions, ensuring a very high flexibility and configurability as well as the possibility of application to different fields, scenarios and situations. It is a first object of the present invention to introduce a safety system for working areas (industrial areas, construction sites, agricultural areas, etc.) which allows overcoming the issues present in the safety systems of the background, briefly described before.

Therefore, it is another object of the present invention to introduce a safety system for working areas which allows delimiting, in a configurable manner, sub-areas within which different rules apply and different safety criteria are applied to vehicles, to means and to operators therewithin.

It is another object of the present invention to introduce a safety system for working areas which allows it to be configured in a simple, rapid and inexpensive manner, following changed operating conditions of the industrial area the safety of which is to be ensured.

It is a further object of the present invention to introduce a safety system for working areas which automatically adapts the operation thereof to the changing operating conditions of the working area the safety of which is to be ensured. The changed operating conditions may be related, for example, to the number and distribution of operators in a given region of the area of interest, or to the detection of the proximity of operators to possible dangerous interferers, or even to the statistical analysis of the events previously detected by the system itself.

Further objectives and advantages of the present invention will become apparent to those skilled in the art from the detailed description of the invention described below.

### DETAILED DESCRIPTION OF THE INVENTION

The present invention relates to a distributed safety aid system for working areas (such as construction sites, ports, large workshops, industrial and agricultural areas, etc., for example) which house moving vehicles (such as tractors, bulldozers, forklifts, industrial trolleys, bridge cranes, cranes, etc., for example) and operators who move and work within said area. The system allows detecting the presence of an operator, of another means or, more generally, of an obstacle at a certain detection distance which may be adapted, for example, to the speed of the vehicle so as to allow adequate braking distances. Following such a detection, various types of warnings may be directed to the driver of the vehicle or towards the outside, or directly operating on the means thus causing it to slow down or stop may be possible.

The system uses the transmission of one or more activation signals, which may use multiple frequencies, by means of coded transmitters placed on the means which operate within the area of interest. The transmitted activation signal is received by RFID transceiver devices - called RFID TAGS - worn by the operators present in the area of interest or installed on fixed or movable objects within the working area, which respond on a radio channel which is different from that used for the transmission of the activation signals.

The use of multiple frequencies for the activation signals allows differentiating multiple independent operation thresholds of the system, while the separate response channel allows reaching an optimal compromise between reliability and promptness of the response, consumption and coverage distance.

In a preferred embodiment of the present invention described below, the system uses both microwave and low frequency activation, by the transmitter to the vehicle, and a response, by the RFID TAG, in the UHF band. Microwave band usually means the band comprising electromagnetic radiation having a wavelength between one meter and one millimeter and, correspondingly, frequencies between 300 MHz and 300 GHz. The Ultra High Frequency (UHF) band, on the other hand, is commonly intended to have an extension between 300 MHz and 3 GHz.

While microwave activation has a very wide operating range, up to several tens of meters, low frequency activation has a much smaller operating range but is immune to shielding created by the human body and allows a more reliable and precise adjustment of the TAG activation distance. The different frequency ranges used allow defining two distinct areas, each characterized by different risk levels in relation to the same event, given that the activation distances are different.

A preferred embodiment of the system, according to the present description, may use, for low frequency activation, transmission in the LF (30-300kHz) MF (300-3000kHz) and HF (3-30MHz) bands. Successfully used frequencies are, for example, 125kHz and 13.56MHz. For the transmission of the microwave activation signal, on the other hand, preferred embodiments of the present invention use signals of a frequency greater than 1GHz. The 2.4GHz channel, as well as the frequencies in the 5GHz to 6GHz range, and the 24GHz frequency have been used successfully.

The radio frequency channel used for the response communication by the RFID TAG, on the other hand, is preferably selected from the frequencies below 1GHz. Preferred embodiments of the system according to the present description use frequencies of 433MHz or frequencies between 800MHz and 960MHz. In the latter range, several bands are there which may be advantageously used according to the regulatory frameworks of the country in which the system is to operate.

An electronic processing unit belonging to the system manages the various transmitters, receivers, any external sensors used, as well as the warnings to the driver of the means and interfaces with the control devices of the means so as to influence the behavior thereof. Furthermore, the processing unit stores the data (for example, the TAG code, the sensor code, the time stamp of the event detected, the position, the speed, etc.) which are collected by all the sensors connected to the system at each event detected acting as a trigger for storing data on suitable storage media. Said processing unit may also manage the dynamic configuration of the functional parameters of the system based on information originating from possible auxiliary sensors, such as speed and position meters, for example, placed on the means and in the environment of interest. For example, the processing unit may change the detection range of the individual sensors of the system.

The technology of dual frequency active RFID devices protected by European patent EP1209615, which forms an integral part of this application, provides for the use of three fundamental blocks.

An activator or illuminator, a dual frequency controlled RFID transmitter (referred to, hereinafter, as a dual frequency RFID TAG or simply as a TAG) and a receiver. The activator conventionally transmits a microwave signal. The TAG has a microwave receiver with very low consumption and high reactivity, such that, when it reaches the area of action of said activator, it is capable of recognizing the signal thereof, configure itself and proceed, if required, with a transmission to said receiver, preferably using a different radio channel. The activator and the receiver may be inside the same apparatus or they may be separate.

When the TAG is activated by the illuminator, it is also configured by the latter. Thereby, the TAG is given the identifier and properties of the activating illuminator and also acquires a specific operating mode with each activation.

This allows the response mode to be configured according to the particular need. For example, in the case of systems in which a warning is to be generated, the response will have to privilege speed, for example by choosing channels explicitly dedicated thereto.

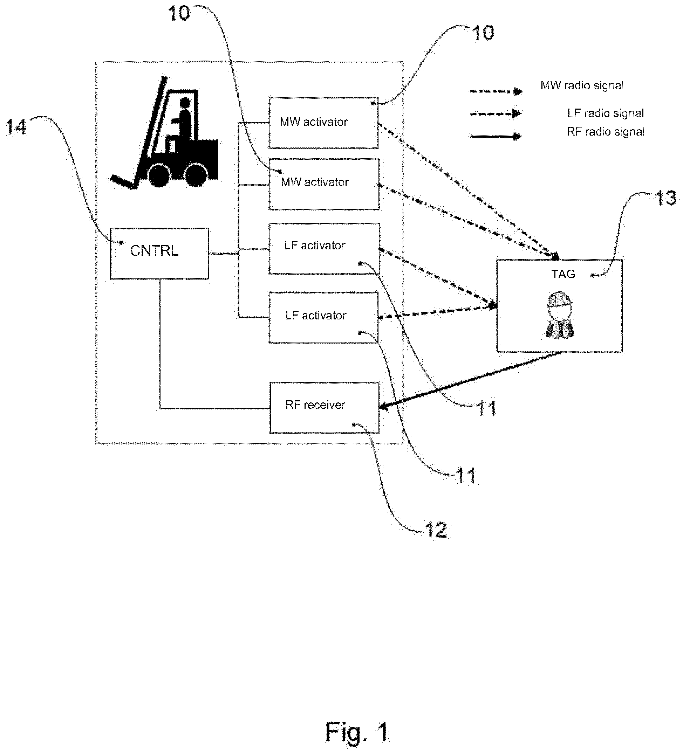

With reference to accompanying Figure 1, a first embodiment of the system according to the present invention comprises an RFID transceiver system comprising:

At least a first high frequency activator 10, preferably a microwave activator, and preferably having variable and controllable power, configured to activate the TAG from a long distance, typically up to about 40m and above. In the case of the use of a high frequency activator 10 having variable and controllable power, the activation distance may advantageously change based on the power of the activator. Said microwave activator preferably comprises a coded transmitter connected to an antenna. The frequency bands used are typically greater than 1GHz.

At least a first low frequency activator 11, preferably having variable and controllable power, activates the TAGs in the proximity, with a typical distance of about 6 m. Also in this case, in the case of the use of a low frequency activator 11 having variable and controllable power, the activation distance may advantageously change based on the power of the activator. It is a coded transmitter which may use a low frequencies, for example between 100 and 150kHz, irradiated by means of special inductive antennas. Other frequencies within the LF (30-300kHz), MF (300-3000kHz) or HF (3-30MHz) bands may be used, as in any RFID system of the inductive type.

At least one receiver 12, for example in the UHF band, which collects the TAG responses. Said receiver 12 may integrate a special antenna.

At least one TAG 13, i.e., a device preferably battery powered which is adapted to receive both microwave activation from said high frequency activator 10, as well as low frequency activation from said first low frequency activator 11. The TAG 13 is also adapted to respond by means of a special coded transmitter housed on board and equipped with an antenna. The response of the TAG 13 preferably occurs in the UHF band.

A processing, storage and control unit 14 associated with said activators 10, 11, with said receiver 12 and with the system for controlling the traction and the movement of the lifting members of the vehicle on which the system according to the present description is installed, so as to act on the direction of travel and/or on the speed of the vehicle itself, as well as on the movement of other accessories with which the vehicle is provided, such as forks or buckets or other. The processing, control and storage unit 14 stores the data (for example, the TAG code, the sensor code, the time stamp of the event detected, the position, the speed, etc.) which are collected by all the sensors connected to the system at each event detected acting as a trigger for storing data on suitable storage media. Said processing, control and storage unit 14 may also manage the dynamic configuration of the functional parameters of the system based on information originating from possible auxiliary sensors, such as speed and position meters, for example, placed on the means and in the environment of interest. For example, the processing, control and storage unit 14 may change the detection range of the individual sensors of the system. Furthermore, advantageously, the system may act on special acoustic and/or optical warning devices, arranged on the means and adapted to warn the driver of the means about the imminent danger, as well to act on the means, for example on the actuators of the means lifting members. Considering the example of a construction site, of a port or of another general workplace in which both means as well as operators on foot move and operate, preferably, low frequency 11 and microwave activators 10, the receiver 12 and the processing, control and storage unit 14 may be arranged on vehicles or heavy vehicles operating within the working area, while the TAGs 13 are associated with operators on foot or with sensitive passages or even with sensitive structures or installations which must be protected from unwanted and dangerous contacts or crossings. The TAGs 13 may also be associated with the protection of areas closed to the circulation of means, such as pedestrian areas or areas for the exclusive use of pedestrians, for example. This preferred embodiment of the present invention may be employed, for example, on a trolley used for moving goods inside a warehouse. In many fields, for example that of storing paper industry finished products, means and people are often allowed to move within the same room. The aforesaid preferred embodiment may further allow warning the driver of the means about the proximity of a ground operator by means of suitable acoustic and/or optical warning devices present on the means. Both a pre-warning may be provided, by exploiting the signal of the first long-distance high frequency activator 10, as well as an actual danger warning, when the TAG 13 worn by the operator is activated by said first low frequency activator 11.

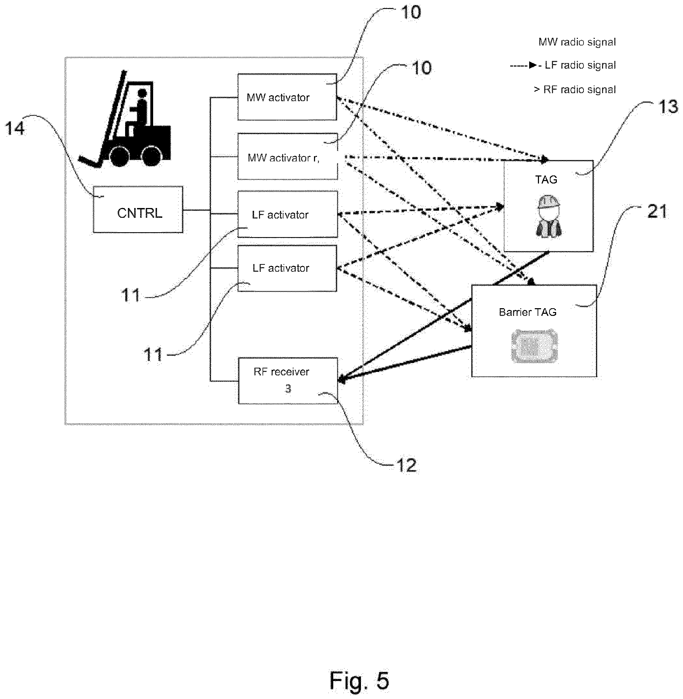

Another preferred embodiment of the present invention is shown in accompanying Figure 5, and is capable of obtaining a so-called "electronic barrier" function. If a TAG 21 is associated with an object, a structure or a sensitive installation to be protected from unwanted and dangerous contacts, it is possible to warn the vehicle about the proximity of objects or areas of attention or risk, thus influencing the behavior thereof. Thereby, a sort of electronic barrier may be created, approaching which the vehicle may change state and get into a more controlled operating mode, slowing down the travel speed thereof or even braking until stopping, thus preventing the vehicle to access the sensitive area (for example, an area reserved for pedestrians only).

Said TAG 21 may be achieved, for example, as a step-marker to be applied on the ground in a certain predetermined position. The TAGs 21 may be equipped with wired or autonomous and independent battery-type power supply, possibly rechargeable, and/or comprising solar cells.

The so-called "electronic barrier" function described may be implemented on the vehicle which houses the system without the need for any hardware additions with respect to what already provided for the anti-collision system previously described with reference to the diagram shown in accompanying Figure 1. It is therefore possible to update and expand (or "retrofit") an existing anti-collision system of the same type by adding this important function simply by equipping the working environment, the safety of which is to be ensured, with additional TAG 21 devices adapted to create virtual electronic barriers. TAG 13 devices associated with operators on foot present in the working area may be advantageously distinguished, with respect to TAG 21 devices associated with structures of interest or placed on the ground, simply by using, in the TAGs 13 associated with the operators, a different coding from that used in the transmitters included in the TAGs 21 associated with structures of interest or placed on the ground.

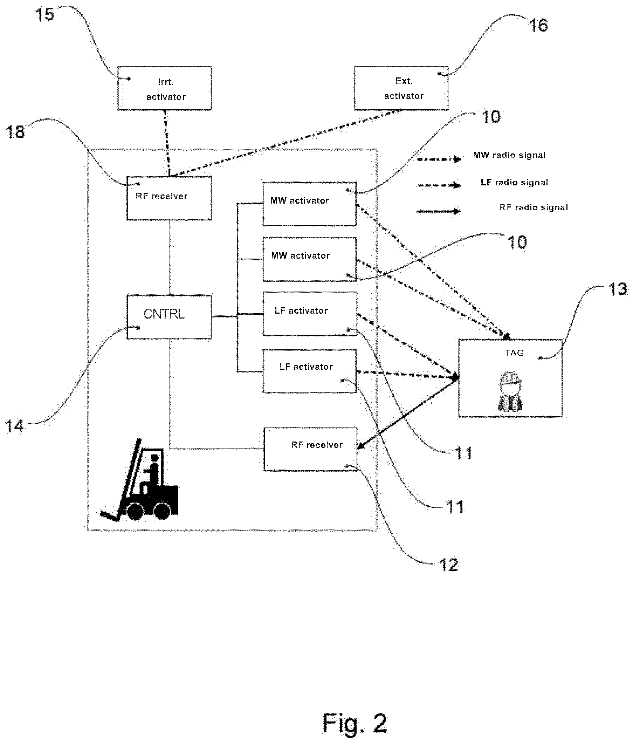

Another preferred embodiment of the present invention, a version of which is shown in detail in accompanying Figure 2, is capable of obtaining, for example, a so-called "electronic passage" or "electronic gate" function.

This function uses a radio signal to inform the system on board the vehicle or heavy vehicle of the crossing of a passage and the direction in which this crossing occurs. This preferred embodiment uses at least two further activators, a second high frequency activator 15, arranged inside the passage to be protected, a third high frequency activator 16, arranged outside the passage to be protected, and a second receiver 18, preferably equipped with an antenna thereof, associated with said processing, control and storage unit 14 and arranged on the vehicle or on the means passing through the passage.

By reading the signals originating from said second 15 and third 16 high frequency activator in a given order, said second receiver 18 is capable of detecting the crossing of a sensitive passage and the direction in which this crossing occurs. Based on the detection of the crossing of the sensitive passage, the vehicle may change the speed or other configurations depending on whether it is entering or exiting a certain area. Furthermore, the information relating to the crossing of the passage by the vehicle may be transmitted to other systems such as other vehicles, for example, so as to signal the entry and therefore the presence of a vehicle in a specific area of interest.

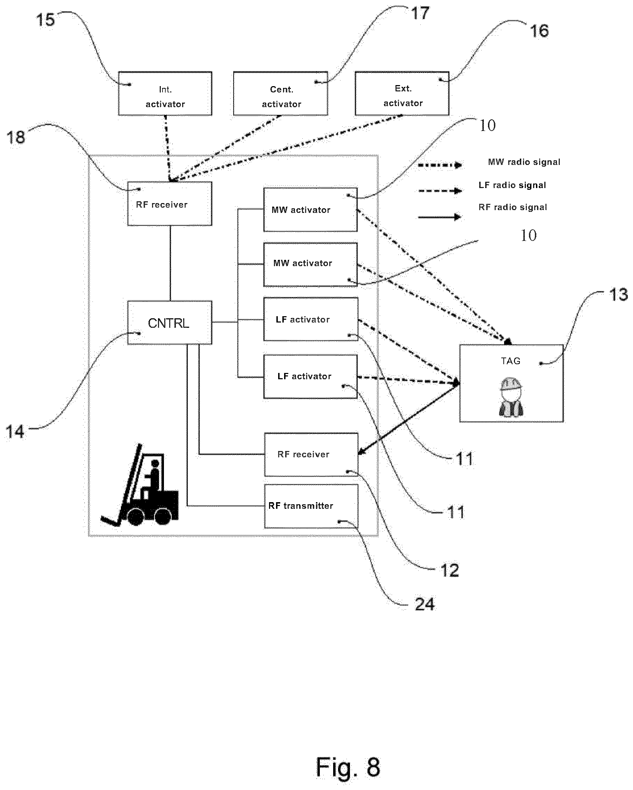

In a preferred embodiment, shown in accompanying Figure 8, the detection of the crossing of the passage - or other types of interference detected - may produce acoustic and visual warnings addressed by the vehicle to the ground operators, for example by activating the headlights, the flashing light and/or the horn of the vehicle. Alternatively, alarm and warning means may also be arranged on fixed installations to ensure the visibility and audibility thereof in the whole area of potential collision risk in which the vehicle has entered. In this preferred embodiment there is therefore another radio frequency transmitter 24, associated with the processing, control and storage unit 14 and adapted to transmit a signal with information relating to events, such as the detection of the crossing of a passage, for example, to a corresponding radio frequency receiver, which may be the receiver 12 on board another means, or another receiver associated with warning means operable remotely and located, for example, within the working area, in an appropriate position such as to maximize the possibility of reception by operators. This signal may also be sent to a network of transmitters scattered in the environment of interest, a network of transmitters adapted to transfer the information to all the means operating in the area of interest, also automatically changing the features of the settings thereof.

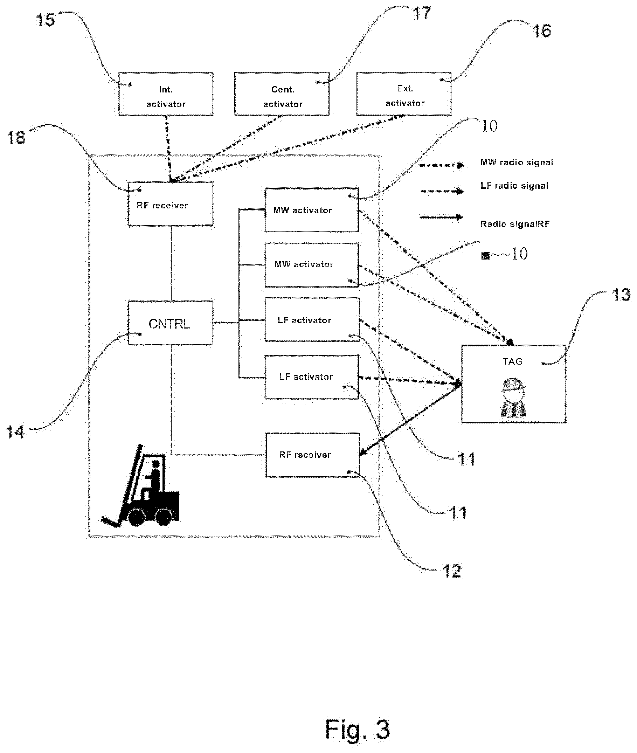

In another version of the preferred embodiment of the invention shown in accompanying Figure 3, a fourth high frequency activator 17 is used, arranged on the passage, in an intermediate position with respect to the second high frequency activator 15 and to the third high frequency activator 16. This fourth high frequency activator 17 is adapted to create an area in which both the signals of the second high frequency activator 15 and of the third high frequency activator 16 are obscured, so as to prevent multiple internal-external transitions from occurring during the crossing of the passage by the vehicle or heavy vehicle.

Said second, third and fourth high frequency activators 15, 16, 17 may be manufactured with transmitters which use frequencies conventionally greater than 1GHz, such as the first high frequency activator 10 on board the vehicle. Preferably, said second, third and fourth high frequency activators 15, 16, 17 differ from the first high frequency activator 10 in terms of type of modulation and/or coding so as to minimize the risk of interference with the activation of any tags carried out by the first high frequency activator 10 in the area of interest of the gate. The receiver 12 on board the vehicle must be suitably configured to receive the gate activator signals and to communicate, downstream of a suitable reception sequence, the crossing of the passage to the processing, control and storage unit 14, which, in turn, will adjust the speed settings of the vehicle housed in the system according to the present invention.

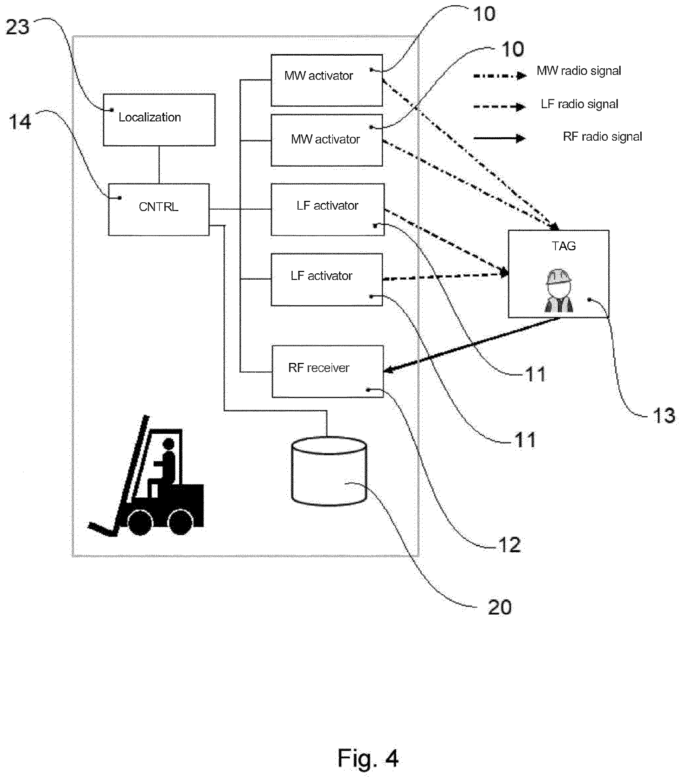

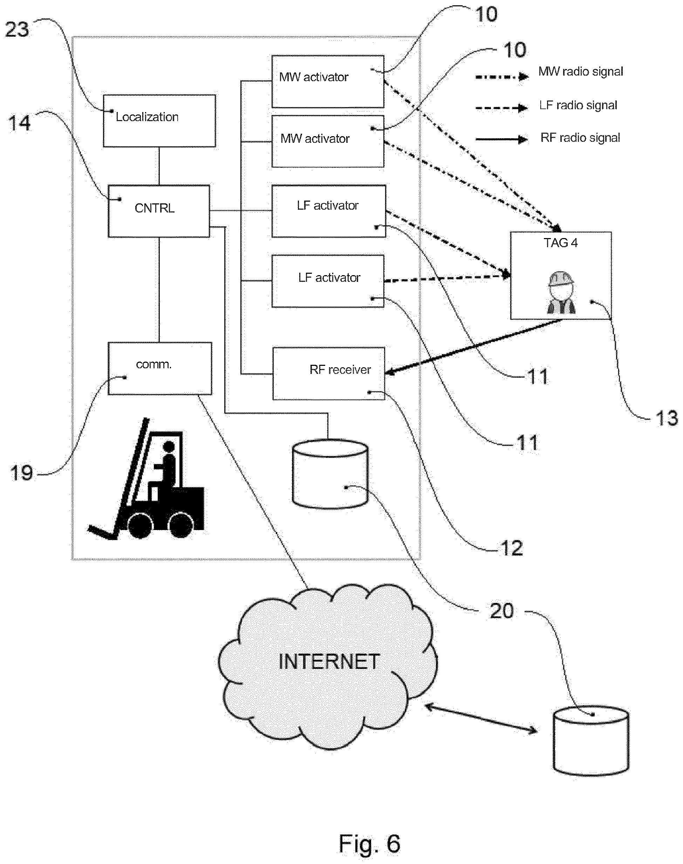

A further preferred embodiment of the system according to the present invention is shown in accompanying Figures 4 and 6. This preferred embodiment uses a geo-referenced position detector 23, for example a GPS module, associated with said processing, control and storage unit 14 together with maps stored in storage means 20 present on board the vehicle and/or reachable by means of a communication module 19, also associated with said processing, control and storage unit 14 and adapted to establish a wireless connection with a remote server, according to known and commonly used techniques.

Said maps refer to areas delimited and characterized by a set of precise rules which forms an actual behavior profile of the active safety system on board the vehicle within the site of interest and also of the means itself inside the various areas defined in a different manner. Such delimited areas may be identified by two-dimensional polygons and may be stored inside said storage means 20 as a simple set of points characterized by the coordinates thereof placed in sequence so as to form a closed segment. Each pair with the next one forms a segment. At this point, it will be necessary to apply a simple algorithm which, starting from the positioning point of the means, traces any half-line. If the number of crossings by the half-line of the segments of the polygon described by the set of coordinates is equal, the point is outside the polygon, otherwise it is inside and therefore the means is inside the area represented by said polygon.

The processing and control unit 14 is therefore capable of recognizing, by virtue of the GPS module 23, when it is located within the aforesaid areas delimited and characterized by precise rules, and to consequently configure the operation of the trolley and of the safety aid system. For example, within these areas the maximum speeds and activation ranges in particular areas may be reduced. Also in this case, visual or acoustic warnings arranged on the moving means may be activated in particular areas. In general, each area and therefore each position of the means will be associated with a means behavior profile, a profile characterized by a suitable set of parameters for the means itself configured by the system. The sets of parameters will be stored in the processing, storage and control unit 14.

Said geo-referenced position detector 23 may also be obtained by, in addition to GPS systems, real-time location systems (RTLS) such as ultra-wideband ones (UWB) or those based on the angle of arrival (AoA) possibly, in turn, geo-referenced.

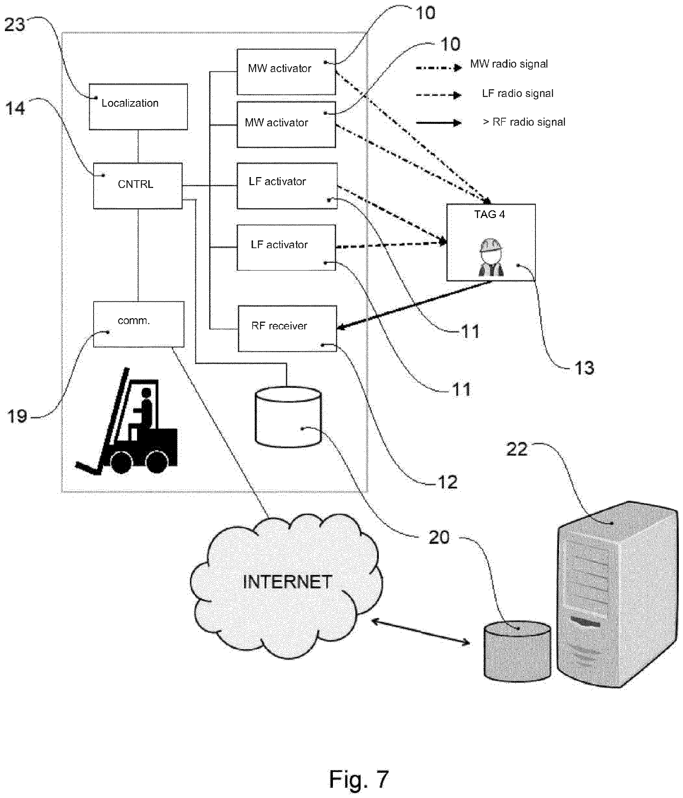

In a further preferred embodiment of the present invention, shown in accompanying Figure 7, the system comprises a further remote processing, storage and control unit 22 capable of communicating with said processing, storage and control unit 14 by means of said communication module 19. Said remote processing, storage and control unit 22 is adapted to implement functions for the dynamic management of the spatial conditioning of the safety system, i.e., it is adapted to receive, from said processing and control unit 14, and to process, by means of suitable optimization SWs, information on the pre-warnings and warnings which have been given, on the detections made by any sensors connected to the system, and, based on this information, to modify the maps contained in said storage means 20 or the set of rules which said processing and control unit 14 must apply according to the various situations in which the corresponding vehicle is operating. Said information relating to events detected by the system are all stored by said processing and control unit 14 and may be communicated periodically or in real time to the remote processing, storage and control unit 22.

These maps may be updated in relation to changed operating conditions in the working area, for example. The changed operating conditions may be detected by the remote processing, storage and control unit 22, for example based on the statistical analysis of the data received, and on the basis thereof, the new parameters to be applied to the system and to the means in the various areas are recalculated, or the conformation of the areas themselves are modified so as to minimize risk. In areas with greater risk, lower vehicle speeds and/or warnings may be associated according to requirements. It is also possible to establish constraints according to which the updating of the maps or of the conditions to be applied may be determined automatically and/or periodically when in a certain sub-area or on a certain day of the week, in a certain time of day, etc.

The high flexibility of the invention of the present description allows dividing the working area of interest into different areas according to dynamic conformation and profiling which may depend on various factors including the type of activity carried out, crowding and therefore the incidence of the risk of any interference between operators, vehicles and structures or machinery, etc. Both the dynamic conformation and the profiling of the individual areas may be subject to change based on the processing of the data collected by the system, for example by means of statistical analyzes carried out on the data themselves.

The aforesaid dynamic conformation and profiling may be carried out by means of periodic updates, which may also be programmable, and also continuously and therefore in real time by means of communication between the local 14 and the remote processing, storage and control unit 22.

## Claims

1. An active safety system for a workplace comprising:
at least a first microwave activator (10), associated with a vehicle operating in the workplace and configured to activate a transceiver, TAG, (13, 21) at a first distance;
at least a first lower frequency activator (11), associated with a vehicle operating in the workplace and configured to activate a transceiver, TAG, (13, 21) at a second shorter distance than said first distance;
at least one transceiver, TAG, (13, 21), associated with operators or fixed structures inside the workplace and adapted to receive activation signals from said microwave activator (10) and from said first low frequency activator (11) and to transmit a response signal upon receiving the activation signal;
at least one receiver (12, 18), associated with a vehicle operating in the workplace and adapted to receive the response signal of said at least one transceiver, TAG, (13, 21), upon receiving the activation signal;
a processing, storage and control unit (14) associated with said first and second activators (10, 11), said receiver (12, 18), and the vehicle traction control system,
said processing, storage and control unit (14) being adapted to act on the direction of travel and on the speed of the vehicle if an event related to a possible interference between said vehicle and said operators or fixed structures is detected based on the signals received by said receiver (12, 18) **characterized in** further comprising
a geo-referenced position detector (23) associated with said processing, storage and control unit (14);
local storage means (20) adapted to contain at least one map of the work area in which different safety rules correspond to sub-areas of the work area, said processing, storage and control unit (14) being further adapted to determine the current position of the vehicle and to act on the direction of travel and on the speed of the vehicle based on said safety rules, if an event related to a possible interference between said vehicle and said operators or fixed structures is detected based on the signals received by said receiver (12, 18).

2. A system according to claim 1 **characterized in that** said first microwave activator (10) and said first low frequency activator (11) are of the variable and controllable power type, and said first and second distances are variable.

3. A system according to one or more of the preceding claims, **characterized in that** it comprises warning devices of the acoustic type, of the optical type or of both types, associated with said processing, storage and control unit (14) and adapted to signal imminent danger conditions based on the signals received by said receiver (12, 18).

4. A system according to one or more of the preceding claims, **characterized in that** said at least one transceiver, TAG (13, 21), comprises at least one transceiver, TAG, (21) adapted to be applied to an object, a structure or on the ground, in a preset position, so as to outline and delimit safety areas which are prohibited for vehicles.

5. A system according to the preceding claim, **characterized in that** said at least one transceiver, TAG, (21) is associated with power supply means of the battery type and/or comprising solar cells.

6. A system according to one or more of the preceding claims, **characterized in that** said transceivers, TAGs, (13) associated with the operators inside the workplace, use a different coding from that used in the transceivers, TAGs, (21) associated with structures of interest or placed on the ground.

7. A system according to one or more of the preceding claims, **characterized in that** it comprises:
a second high frequency activator (15) associated with the entrance side of a passage inside the work area;
a third high frequency activator (16) associated with the exit side of a passage inside the work area;
a second receiver (18), associated with a vehicle operating in the workplace and
with said processing, storage and control unit (14) and arranged on the vehicle or on the means passing through the passage, said processing, storage and control unit (14) being further adapted to detect the crossing of said passage and the direction in which this crossing occurs, based on the signals from said second (15) and third (16) high frequency activators.

8. A system according to the preceding claim, **characterized in that** it comprises a fourth high frequency activator (17) associated with said passage inside the work area, in an intermediate position with respect to the second high frequency activator (15) and to the third high frequency activator (16), and adapted to create a zone in which both the signals of the second high frequency activator (15) and of the third high frequency activator (16) are obscured, so as to prevent multiple inside-outside transitions from occurring when crossing the passage by the vehicle.

9. A system according to one or more of the preceding claims, **characterized in that** it comprises a radio frequency transmitter (24) associated with the processing, storage and control unit (14) and adapted to send information on events detected by said processing, storage and control unit (14) to a corresponding remote radio frequency receiver.

10. A system according to the preceding claim, **characterized in that** said remote radio frequency receiver is selected from the group comprising the receiver (12) on board another vehicle and a receiver associated with remotely operable alarm means.

11. A system according to one or more of the preceding claims, **characterized in that** it comprises a communication module (19), also associated with said processing, storage and control unit (14) and adapted to establish a connection with a remote server associated with remote storage means adapted to contain at least one map of the work area in which different safety rules correspond to sub-areas of the work area, said processing, storage and control unit (14) being further adapted to determine the current position of the vehicle and to act on the direction of travel and on the speed of the vehicle based on said safety rules, if an event related to a possible interference between said vehicle and said operators or fixed structures is detected based on the signals received by said receiver (12, 18).

12. A system according to the preceding claim, **characterized in that** it comprises a remote processing, storage and control unit (22) adapted to receive information on events related to possible interferences between said vehicle and said operators or fixed structures from said processing, storage and control unit (14), and based on this information, to modify the maps contained in said local (20) or remote storage means or the set of rules which need to be applied by said processing, storage and control unit (14) in response to said events.

13. A system according to one or more of claims 11 to 13, **characterized in that** said geo-referenced position detector (23) comprises at least one device selected from the group comprising: GPS devices; devices of the Real-Time Location System (RTLS) type; devices of the Ultra-Wide Band (UWB) type; devices of the Angle Of Arrival (AoA) type.

## Patentansprüche

1. Aktives Sicherheitssystem für einen Arbeitsplatz, das Folgendes umfasst:
mindestens einen ersten Mikrowellen-Aktivator (10), der einem am Arbeitsplatz tätigen Fahrzeug zugeordnet ist und so konfiguriert ist, dass er einen Sender-Empfänger, TAG, (13, 21) in einem ersten Abstand aktiviert;
mindestens einen ersten Niederfrequenz-Aktivator (11), der einem am Arbeitsplatz tätigen Fahrzeug zugeordnet ist und so konfiguriert ist, dass er einen Sender-Empfänger, TAG, (13, 21) in einem zweiten, kürzeren Abstand als dem ersten Abstand aktiviert;
mindestens einen Sender-Empfänger, TAG, (13, 21), der Bedienern oder festen Strukturen innerhalb des Arbeitsplatzes zugeordnet ist und dazu geeignet ist, Aktivierungssignale von dem Mikrowellen-Aktivator (10) und von dem ersten Niederfrequenz-Aktivator (11) zu empfangen und ein Antwortsignal beim Empfang des Aktivierungssignals zu senden;
mindestens einen Empfänger (12, 18), der einem am Arbeitsplatz tätigen Fahrzeug zugeordnet ist und dazu geeignet ist, das Antwortsignal des mindestens einen Sender-Empfängers, TAG, (13, 21) beim Empfang des Aktivierungssignals zu empfangen;
eine Verarbeitungs-, Speicher- und Steuereinheit (14), die den ersten und zweiten Aktivatoren (10, 11), dem Empfänger (12, 18) und dem Fahrzeugantriebssteuersystem zugeordnet ist, wobei die Verarbeitungs-, Speicher- und Steuereinheit (14) dazu geeignet ist, auf die Fahrtrichtung und die Geschwindigkeit des Fahrzeugs einzuwirken, wenn ein Ereignis, das sich auf eine mögliche Interferenz zwischen dem Fahrzeug und den Bedienern oder festen Strukturen bezieht, auf der Grundlage der von dem Empfänger (12, 18) empfangenen Signale erfasst wird, **dadurch gekennzeichnet, dass** sie ferner einen georeferenzierten Positionsdetektor (23) umfasst, der der Verarbeitungs-, Speicher- und Steuereinheit (14) zugeordnet ist;
lokale Speichermittel (20), die dazu geeignet sind, mindestens eine Karte des Arbeitsbereichs zu enthalten, in der verschiedene Sicherheitsregeln Unterbereichen des Arbeitsbereichs entsprechen, wobei die Verarbeitungs-, Speicher- und Steuereinheit (14) ferner dazu geeignet ist, die aktuelle Position des Fahrzeugs zu bestimmen und auf der Grundlage der Sicherheitsregeln auf die Fahrtrichtung und die Geschwindigkeit des Fahrzeugs einzuwirken, wenn auf der Grundlage der von dem Empfänger (12, 18) empfangenen Signale ein Ereignis erfasst wird, das sich auf eine mögliche Interferenz zwischen dem Fahrzeug und den Bedienern oder festen Strukturen bezieht.

2. System nach Anspruch 1, **dadurch gekennzeichnet, dass** der erste Mikrowellen-Aktivator (10) und der erste Niederfrequenz-Aktivator (11) vom Typ mit variabler und steuerbarer Leistung sind, und dass der erste und der zweite Abstand variabel sind.

3. System nach einem oder mehreren der vorstehenden Ansprüche, **dadurch gekennzeichnet, dass** es Warnvorrichtungen des akustischen Typs, des optischen Typs oder beider Typen umfasst, die der Verarbeitungs-, Speicher- und Steuereinheit (14) zugeordnet sind und dazu geeignet sind, drohende Gefahrenzustände auf der Grundlage der von dem Empfänger (12, 18) empfangenen Signale zu signalisieren.

4. System nach einem oder mehreren der vorstehenden Ansprüche, **dadurch gekennzeichnet, dass** der mindestens eine Sender-Empfänger, TAG, (13, 21) mindestens einen Sender-Empfänger, TAG, (21) umfasst, der dazu geeignet ist, an einem Objekt, einer Struktur oder auf dem Boden in einer voreingestellten Position angebracht zu werden, um Sicherheitsbereiche zu skizzieren und abzugrenzen, die für Fahrzeuge verboten sind.

5. System nach dem vorstehenden Anspruch, **dadurch gekennzeichnet, dass** der mindestens eine Sender-Empfänger, TAG, (21) einer Energieversorgungseinrichtung vom Typ Batterie und/oder mit Solarzellen zugeordnet ist.

6. System nach einem oder mehreren der vorstehenden Ansprüche, **dadurch gekennzeichnet, dass** die Sender-Empfänger, TAGs, (13), die den Bedienern innerhalb des Arbeitsplatzes zugeordnet sind, eine andere Kodierung verwenden als die, die in den Sender-Empfängern, TAGs, (21) verwendet wird, die den Strukturen von Interesse zugeordnet oder auf dem Boden angeordnet sind.

7. System nach einem oder mehreren der vorstehenden Ansprüche, **dadurch gekennzeichnet, dass** es umfasst:
einen zweiten Hochfrequenz-Aktivator (15), der der Eingangsseite eines Durchgangs innerhalb des Arbeitsbereichs zugeordnet ist;
einen dritten Hochfrequenz-Aktivator (16), der der Ausgangsseite eines Durchgangs innerhalb des Arbeitsbereichs zugeordnet ist;
einen zweiten Empfänger (18), der einem am Arbeitsplatz tätigen Fahrzeug und der Verarbeitungs-, Speicher- und Steuereinheit (14) zugeordnet ist und auf dem Fahrzeug oder auf dem den Durchgang passierenden Mittel angeordnet ist, wobei die Verarbeitungs-, Speicher- und Steuereinheit (14) ferner dazu geeignet ist, die Überquerung des Durchgangs und die Richtung, in der diese Überquerung erfolgt, auf der Grundlage der Signale des zweiten (15) und dritten (16) Hochfrequenz-Aktivators zu erfassen.

8. System nach dem vorstehenden Anspruch, **dadurch gekennzeichnet, dass** es einen vierten Hochfrequenz-Aktivator (17) umfasst, der dem Durchgang innerhalb des Arbeitsbereichs zugeordnet ist, sich in einer Zwischenposition in Bezug auf den zweiten Hochfrequenz-Aktivator (15) und den dritten Hochfrequenz-Aktivator (16) befindet und dazu geeignet ist, einen Bereich zu erzeugen, in dem sowohl die Signale des zweiten Hochfrequenz-Aktivators (15) als auch die des dritten Hochfrequenz-Aktivators (16) verdeckt sind, um zu verhindern, dass beim Überqueren des Durchgangs durch das Fahrzeug mehrere Übergänge von innen nach außen auftreten.

9. System nach einem oder mehreren der vorstehenden Ansprüche, **dadurch gekennzeichnet, dass** es einen Funkfrequenzsender (24) umfasst, der der Verarbeitungs-, Speicher- und Steuereinheit (14) zugeordnet ist und dazu geeignet ist, Informationen über von der Verarbeitungs-, Speicher- und Steuereinheit (14) erfasste Ereignisse an einen entsprechenden entfernten Funkfrequenzempfänger zu senden.

10. System nach dem vorstehenden Anspruch, **dadurch gekennzeichnet, dass** der entfernte Funkfrequenzempfänger aus der Gruppe ausgewählt ist, die den Empfänger (12) an Bord eines anderen Fahrzeugs und einen Empfänger umfasst, der einem fernbedienbaren Alarmmittel zugeordnet ist.

11. System nach einem oder mehreren der vorstehenden Ansprüche, **dadurch gekennzeichnet, dass** es ein Kommunikationsmodul (19) umfasst, das ebenfalls der Verarbeitungs-, Speicher- und Steuereinheit (14) zugeordnet ist und dazu geeignet ist, eine Verbindung mit einem entfernten Server herzustellen, der entfernten Speichermitteln zugeordnet ist, die dazu geeignet sind, mindestens eine Karte des Arbeitsbereichs zu enthalten, in der verschiedene Sicherheitsregeln Unterbereichen des Arbeitsbereichs entsprechen, wobei die Verarbeitungs-, Speicher- und Steuereinheit (14) ferner dazu geeignet ist, die aktuelle Position des Fahrzeugs zu bestimmen und auf der Grundlage der Sicherheitsregeln auf die Fahrtrichtung und die Geschwindigkeit des Fahrzeugs einzuwirken, wenn auf der Grundlage der von dem Empfänger (12, 18) empfangenen Signale ein Ereignis erfasst wird, das sich auf eine mögliche Interferenz zwischen dem Fahrzeug und den Bedienern oder festen Strukturen bezieht.

12. System nach dem vorstehenden Anspruch, **dadurch gekennzeichnet, dass** es eine entfernte Verarbeitungs-, Speicher- und Steuereinheit (22) umfasst, die dazu geeignet ist, von der Verarbeitungs-, Speicher- und Steuereinheit (14) Informationen über Ereignisse zu empfangen, die sich auf mögliche Interferenzen zwischen dem Fahrzeug und den Bedienern oder festen Strukturen beziehen, und auf der Grundlage dieser Informationen die in den lokalen (20) oder entfernten Speichermitteln enthaltenen Karten oder den Satz von Regeln zu modifizieren, die von der Verarbeitungs-, Speicher- und Steuereinheit (14) als Reaktion auf die Ereignisse angewendet werden müssen.

13. System nach einem oder mehreren der Ansprüche 11 bis 13, **dadurch gekennzeichnet, dass** der georeferenzierte Positionsdetektor (23) mindestens eine Vorrichtung umfasst, die aus der Gruppe ausgewählt ist, die umfasst: GPS-Geräte; Geräte des Typs Real-Time Location System (RTLS); Geräte des Typs Ultra-Wide Band (UWB); Geräte des Typs Angle Of Arrival (AoA).

## Revendications

1. Système de sécurité active pour un lieu de travail comprenant :
au moins un premier activateur hyperfréquence (10), associé à un véhicule fonctionnant dans le lieu de travail et configuré pour activer un émetteur-récepteur, TAG, (13, 21) à une première distance ;
au moins un premier activateur à fréquence inférieure (11), associé à un véhicule fonctionnant dans le lieu de travail et configuré pour activer un émetteur-récepteur, TAG, (13, 21) à une seconde distance plus courte que ladite première distance ;
au moins un émetteur-récepteur, TAG, (13, 21), associé à des opérateurs ou à des structures fixes à l'intérieur du lieu de travail et conçu pour recevoir des signaux d'activation provenant dudit activateur hyperfréquence (10) et provenant dudit premier activateur à basse fréquence (11) et pour émettre un signal de réponse lors de la réception du signal d'activation ;
au moins un récepteur (12, 18), associé à un véhicule fonctionnant dans le lieu de travail et conçu pour recevoir le signal de réponse dudit au moins un émetteur-récepteur, TAG, (13, 21), lors de la réception du signal d'activation ;
une unité de traitement, de stockage et de commande (14) associée auxdits premier et second activateurs (10, 11), audit récepteur (12, 18) et au système de commande de traction de véhicule, ladite unité de traitement, de stockage et de commande (14) étant conçue pour agir sur la direction de déplacement et sur la vitesse du véhicule si un événement se rapportant à une possible interférence entre ledit véhicule et lesdits opérateurs ou lesdites structures fixes est détecté sur la base des signaux reçus par ledit récepteur (12, 18), **caractérisé en ce qu'**il comprend en outre un détecteur de position géoréférencée (23) associé à ladite unité de traitement, de stockage et de commande (14) ;
des moyens de stockage local (20) conçus pour contenir au moins une carte de la zone de travail dans laquelle différentes règles de sécurité correspondent à des sous-zones de la zone de travail, ladite unité de traitement, de stockage et de commande (14) étant en outre conçue pour déterminer la position actuelle du véhicule et pour agir sur la direction de déplacement et sur la vitesse du véhicule sur la base desdites règles de sécurité, si un événement se rapportant à une possible interférence entre ledit véhicule et lesdits opérateurs ou lesdites structures fixes est détecté sur la base des signaux reçus par ledit récepteur (12, 18).

2. Système selon la revendication 1 **caractérisé en ce que** ledit premier activateur hyperfréquence (10) et ledit premier activateur à basse fréquence (11) sont du type à puissance variable et contrôlable, et lesdites première et seconde distances sont variables.

3. Système selon l'une ou plusieurs des revendications précédentes, **caractérisé en ce qu'**il comprend des dispositifs d'avertissement du type acoustique, du type optique ou des deux types, associés à ladite unité de traitement, de stockage et de commande (14) et conçus pour signaler des conditions de danger imminent sur la base des signaux reçus par ledit récepteur (12, 18).

4. Système selon l'une ou plusieurs des revendications précédentes, **caractérisé en ce que** ledit au moins un émetteur-récepteur, TAG (13, 21), comprend au moins un émetteur-récepteur, TAG, (21) conçu pour être appliqué sur un objet, une structure ou au sol, dans une position prédéfinie, de façon à souligner et délimiter des zones de sécurité qui sont interdites aux véhicules.

5. Système selon la revendication précédente, **caractérisé en ce que** ledit au moins un émetteur-récepteur, TAG, (21) est associé à des moyens d'alimentation en puissance du type batterie et/ou comprenant des cellules solaires.

6. Système selon l'une ou plusieurs des revendications précédentes, **caractérisé en ce que** lesdits émetteurs-récepteurs, TAG (13), associés aux opérateurs à l'intérieur du lieu de travail, utilisent un codage différent de celui utilisé dans les émetteurs-récepteurs, TAG, (21) associés à des structures d'intérêt ou placés au sol.

7. Système selon l'une ou plusieurs des revendications précédentes, **caractérisé en ce qu'**il comprend :
un deuxième activateur à haute fréquence (15) associé au côté d'entrée d'un passage à l'intérieur de la zone de travail ;
un troisième activateur à haute fréquence (16) associé au côté de sortie d'un passage à l'intérieur de la zone de travail ;
un second récepteur (18), associé à un véhicule fonctionnant dans le lieu de travail et à ladite unité de traitement, de stockage et de commande (14) et agencé sur le véhicule ou sur les moyens traversant le passage, ladite unité de traitement, de stockage et de commande (14) étant en outre conçue pour détecter le franchissement dudit passage et la direction dans laquelle ce franchissement survient, sur la base des signaux provenant desdits deuxième (15) et troisième (16) activateurs à haute fréquence.

8. Système selon la revendication précédente, **caractérisé en ce qu'**il comprend un quatrième activateur à haute fréquence (17) associé audit passage à l'intérieur de la zone de travail, dans une position intermédiaire par rapport au deuxième activateur à haute fréquence (15) et au troisième activateur à haute fréquence (16), et conçu pour créer une zone dans laquelle à la fois les signaux du deuxième activateur à haute fréquence (15) et du troisième activateur à haute fréquence (16) sont occultés, de façon à empêcher que de multiples transitions intérieur-extérieur ne surviennent lors du franchissement du passage par le véhicule.

9. Système selon l'une ou plusieurs des revendications précédentes, **caractérisé en ce qu'**il comprend un émetteur radiofréquence (24) associé à l'unité de traitement, de stockage et de commande (14) et conçu pour envoyer des informations sur des événements détectés par ladite unité de traitement, de stockage et de commande (14) vers un récepteur radiofréquence distant correspondant.

10. Système selon la revendication précédente, **caractérisé en ce que** ledit récepteur radiofréquence distant est sélectionné parmi le groupe comprenant le récepteur (12) à bord d'un autre véhicule et un récepteur associé à des moyens d'alarme actionnables à distance.

11. Système selon l'une ou plusieurs des revendications précédentes, **caractérisé en ce qu'**il comprend un module de communication (19), également associé à ladite unité de traitement, de stockage et de commande (14) et conçu pour établir une connexion avec un serveur distant associé à des moyens de stockage distant conçus pour contenir au moins une carte de la zone de travail dans laquelle différentes règles de sécurité correspondent à des sous-zones de la zone de travail, ladite unité de traitement, de stockage et de commande (14) étant en outre conçue pour déterminer la position actuelle du véhicule et pour agir sur la direction de déplacement et sur la vitesse du véhicule sur la base desdites règles de sécurité, si un événement se rapportant à une possible interférence entre ledit véhicule et lesdits opérateurs ou lesdites structures fixes est détecté sur la base des signaux reçus par ledit récepteur (12, 18).

12. Système selon la revendication précédente, **caractérisé en ce qu'**il comprend une unité de traitement, de stockage et de commande (22) distante conçue pour recevoir des informations sur des événements se rapportant à de possibles interférences entre ledit véhicule et lesdits opérateurs ou lesdites structures fixes provenant de ladite unité de traitement, de stockage et de commande (14), et sur la base de ces informations, pour modifier les cartes contenues dans lesdits moyens de stockage local (20) ou distant ou l'ensemble des règles qui doivent être appliquées par ladite unité de traitement, de stockage et de commande (14) en réponse auxdits événements.

13. Système selon l'une ou plusieurs des revendications 11 à 13, **caractérisé en ce que** ledit détecteur de position géoréférencée (23) comprend au moins un dispositif sélectionné parmi le groupe comprenant : des dispositifs GPS ; des dispositifs du type à système de localisation en temps réel (RTLS) ; des dispositifs du type à bande ultra-large (UWB) ; des dispositifs du type à angle d'arrivée (AoA).
